# EUROPÄISCHE PATENTSCHRIFT

(11) **EP 2 649 427 B1**
(45) Veröffentlichungstag und Bekanntmachung des Hinweises auf die Patenterteilung: **27.07.2016**
(21) Anmeldenummer: 11776795.4
(22) Anmeldetag: 31.10.2011
(51) Int. Cl.: G01M 15/10, G01M 15/04

(54) **VERFAHREN UND ANORDNUNG ZUR BESTIMMUNG EINES RAUCHBEGRENZUNGSKENNFELDES EINES VERBRENNUNGSMOTORS**
METHOD AND ASSEMBLY FOR DETERMINING A SMOKE LIMITING CHARACTERISTIC DIAGRAM OF AN INTERNAL COMBUSTION ENGINE
PROCÉDÉ ET AGENCEMENT DE DÉTERMINATION D'UN CHAMP CARACTÉRISTIQUE DE LIMITATION DES FUMÉES POUR UN MOTEUR À COMBUSTION INTERNE

(30) Priorität: 06.12.2010 AT 20202010
(43) Veröffentlichungstag der Anmeldung: 16.10.2013
(73) Patentinhaber: AVL List GmbH, 8020 Graz (AT)
(72) Erfinder: VÖGL, Rainer, A-8010 Graz (AT); VOGELS, Marie-Sophie, A-8010 Graz (AT); DAUM, Steffen, A-8010 Graz (AT); ERHART, Josef, A-8784 Trieben (AT)
(74) Vertreter: Patentanwälte Pinter & Weiss OG
(86) Internationale Anmeldenummer: PCT/EP2011/069134
(87) Internationale Veröffentlichungsnummer: WO 2012/076256

(56) Entgegenhaltungen:
- DE-A1- 19 819 445
- DE-A1-102006 020 195

## Beschreibung

Die gegenständliche Erfindung betrifft ein Verfahren zur Bestimmung eines Rauchbegrenzungskennfeldes eines Verbrennungsmotors und eine Anordnung zur Durchführung des Verfahrens.

Bei Verbrennungsmotoren, insbesondere bei Diesel-Motoren, tritt das Problem auf, dass bei großen, schnellen Laständerungen, insbesondere bei Beschleunigung, der Rußausstoß im Abgas stark ansteigt, was sich auch sichtbar an einer schwarzen Abgaswolke bemerkbar macht. Der Grund dafür liegt darin, dass das Verbrennungsluftverhältnis λ durch die Laständerung stark abfällt, da die träge Luftförderung mit dem raschen Anstieg der Menge an zugeführten Treibstoff nicht mithalten kann. Aus diesem Grund ist in heutigen Fahrzeugen, z.B. in der ECU, ein Kennfeld hinterlegt, das zur Vermeidung von hohem Rußausstoß die zugeführte Treibstoffmenge begrenzt, ein sogenanntes Rauchbegrenzungskennfeld. Das ist z.B. aus der DE 10 2006 020 195 A1 bekannt. Im Kennfeld sind typischer Weise über die Last (z.B. Einspritzmenge, Luftmasse) und Drehzahl für jeden Punkt des Betriebsbereichs zulässige Verbrennungsluftverhältnisse λ aufgetragen. Damit kann z.B. die zugeführte Treibstoffmenge limitiert werden. Allerdings gibt es noch andere Einflussfaktoren, die dabei berücksichtigt werden müssen. Z.B. gibt es gesetzliche Vorschriften, was den zulässigen Emissionsausstoß (z.B. NOx, CO₂, etc.) oder die geforderte dynamische Reaktion des Fahrzeugs bzw. des Verbrennungsmotors (hier wird vorgeschrieben, wie schnell eine geforderte Laständerung durchgeführt werden muss) betrifft. Die Erstellung bzw. Kalibrierung eines solchen Rauchbegrenzungskennfeldes ist daher ein sehr aufwendiger Vorgang, der hochqualifiziertes und hocherfahrenes Kalibrierpersonal erfordert.

Es ist daher eine Aufgabe der gegenständlichen Erfindung, ein Verfahren und eine Vorrichtung zur Durchführung des Verfahrens anzugeben, um den Aufwand für die Erstellung bzw. Kalibrierung eines Rauchbegrenzungskennfeldes zu reduzieren.

Diese Aufgabe wird erfindungsgemäß dadurch gelöst, indem für eine Anzahl von Drehzahlen jeweils eine Anzahl von Lastsprüngen durchgeführt werden und dabei die Opazität als Maß für die Rußentwicklung gemessen und mit einer Opazitätsgrenze verglichen wird, wobei für jede Drehzahl mit einem vorgegebenen minimalen Verbrennungsluftverhältnis begonnen wird und jeder Lastsprung unter jeweiliger Erhöhung des jeweils letzten Verbrennungsluftverhältnisses um ein Verbrennungsluftverhältnisinkrement solange wiederholt wird, bis die gemessene Opazität unter einer vorgegebenen Opazitätsgrenze liegt. Dieses Vorgehen erlaubt die Automatisierung der Erstellung des Rauchbegrenzungskennfeldes, wodurch der Aufwand für dessen Erstellen erheblich reduziert werden kann.

Vorteilhaft wird bei jeder Drehzahl zuerst ein Volllastsprung durchgeführt und die dynamische Reaktion des Verbrennungsmotors ermittelt und berücksichtigt, indem die Zeit gemessen wird, die der Verbrennungsmotor benötigt, um eine vorgegebene Lastgrenze zu erreichen und die Drehzahl sofort um ein Drehzahlinkrement erhöht wird, wenn die gemessene Zeit größer als eine vorgegebene Zeit ist. Damit können auch Vorgaben hinsichtlich der zu erzielenden dynamischen Reaktion bei der Erstellung des Rauchbegrenzungskennfeldes berücksichtigt werden und einfließen.

Ebenso ist es vorteilhaft, für eine Drehzahl das Rauchbegrenzungskennfeld mit einer vorgegebenen minimalen Abgasrückführung zu bestimmen und nach der Bestimmung des Rauchbegrenzungskennfeldes zur Bestimmung einer minimalen Abgasrückführung bei dieser Drehzahl einen Volllastsprung unter jeweiliger Erhöhung der minimalen Abgasrückführung um ein Abgasrückführungsinkrement solange zu wiederholen, bis die gemessene Opazität über der um einen parametrierbaren Faktor erhöhten Opazitätsgrenze liegt oder die dynamische Reaktion über einer zulässigen dynamischen Reaktion liegt. Dadurch kann gleichzeitig auch ein Kennfeld für die minimale Abgasrückführung erstellt werden, was wesentlichen Einfluss auf die Abgasemission hat.

Ganz besonders vorteilhaft wird für eine Drehzahl aus der Opazität, der dynamischen Reaktion und der Abgasrückführung ein Kompromiss bestimmt, um die Anforderungen, die sich zum Teil widersprechen, bestmöglich erfüllen zu können.

Die gegenständliche Erfindung wird unter Bezugnahme auf die beispielhaften, schematischen und nicht einschränkenden Figuren 1 bis 8 beschrieben, dabei zeigt
Fig. 1 einen Verlauf des Verbrennungsluftverhältnisses A bei Laständerung,
Fig. 2 das erfindungsgemäße Vorgehen zur Bestimmung des Rauchbegrenzungskennfeldes,
Fig. 3 einen Ablauf zur Bestimmung des Rauchbegrenzungskennfeldes unter Berücksichtigung der dynamischen Reaktion des Verbrennungsmotors,
Fig. 4 einen Ablauf zur Bestimmung des Rauchbegrenzungskennfeldes mit Abstimmung der Abgasrückführung,
Fig. 5 ein Ergebnis einer Abgasrückführungs-Abstimmung,
Fig. 6 und 7 jeweils ein Rauchbegrenzungskennfeld und
Fig. 8 eine Anordnung zur Durchführung des erfindungsgemäßen Verfahrens.

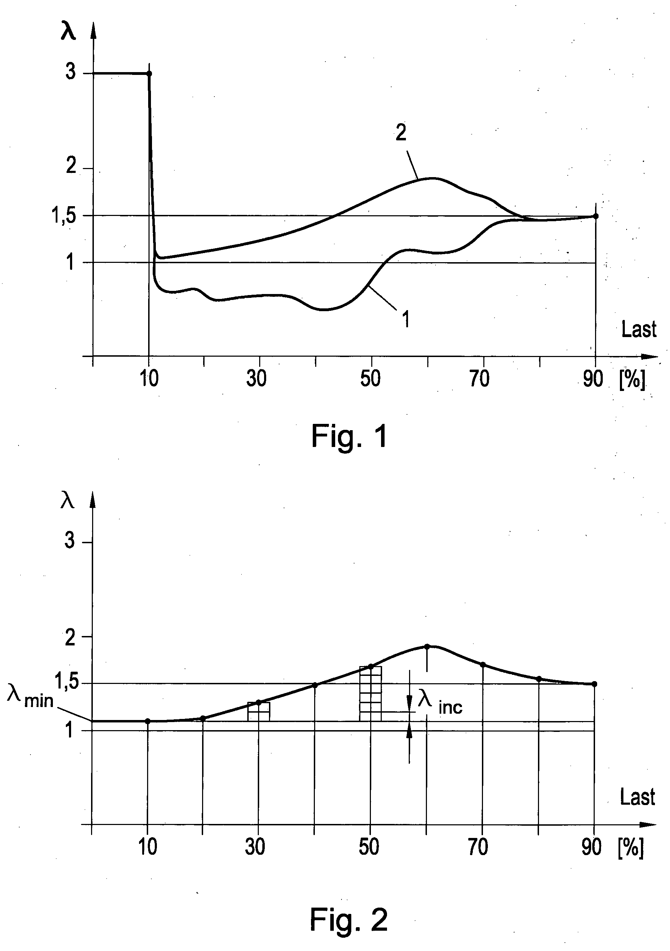

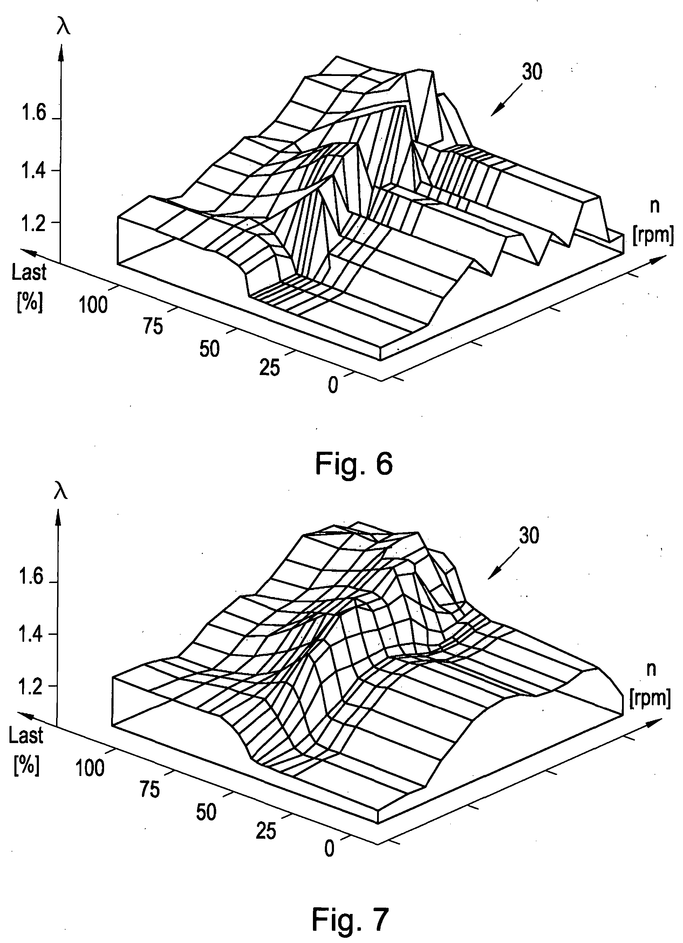

In Fig. 1 ist mit Linie 1 beispielhaft eine Laständerung von 10% zu 90% Last (bezogen auf die Maximallast) bei einer bestimmten Drehzahl n dargestellt. Bei 10% Last läuft der Verbrennungsmotor hier mit einem statischen Verbrennungsluftverhältnis λ=3. Bei einer abrupten Laständerung, z.B. eine rasche Beschleunigung, wird die zugeführte Treibstoffmenge sprunghaft erhöht, womit das Verbrennungsluftverhältnis λ rasch abfällt, da die träge Luftförderung der raschen Treibstoffmengenänderung nicht folgen kann. Der Verbrennungsmotor erreicht irgendwann die gewünschte Last von 90% und hier ein statisches Verbrennungsluftverhältnis λ=1,5. Dazwischen würde der Verbrennungsmotor aber einen unerwünschten erhöhen Rußausstoß erzeugen. Um das zu vermeiden, müsste der Verbrennungsmotor in jedem Punkt ein minimal zulässiges Verbrennungsluftverhältnis λ einhalten, wie in Fig. 1 mit der Linie 2 dargestellt. Erfindungsgemäß soll für jede Drehzahl n eine solche Linie 2, also ein ganzes Rauchbegrenzungskennfeld 30, wie in Fig. 6 oder 7 dargestellt, erstellt werden. Das Verfahren zur erfindungsgemäßen Erstellung des Rauchbegrenzungskennfeldes 30 wird nachfolgend unter Bezugnahme auf die Fig. 2 erläutert.

In bestimmten Drehzahlinkrementen n_{inc}, z.B. alle 250 min⁻¹, werden am Prüfstand eine bestimmte Anzahl von Lastsprüngen durchgeführt, z.B. ein Lastsprung von Leerlauf auf 20%, von Leerlauf auf 30% Last, auf 40% Last, usw. Die Lastsprünge werden dabei bevorzugt von niedriger Last in Richtung hohe Last durchgeführt. Dabei wird zuerst ein minimales Verbrennungsluftverhältnis λ im Rauchbegrenzungskennfeld λₘᵢₙ, z.B. λ=1,1, vorgegeben und der Lastsprung mit diesem minimalen Verbrennungsluftverhältnis λₘᵢₙ ausgeführt. Dabei wird die Rußentwicklung gemessen, z.B. über die Opazität O des Abgases durch geeignete, an sich bekannte Messgeräte (Opazimeter). Die Rußentwicklung kann aber über verschiedenste Messgrößen und Messverfahren bestimmt und angegeben werden. Im Weiteren wird der Begriff "Opazität" allgemein als Maß für die Rußentwicklung verwendet, unabhängig von eigentlichen Messverfahren und der tatsächlichen Messgröße. Ist die gemessene Opazität O über einem vorgegebenen Grenzwert Oₗᵢₘᵢₜ, wird also zuviel Ruß entwickelt, wird das momentan vorgegebene Verbrennungsluftverhältnis λ um ein Verbrennungsluftverhältnisinkrement λ_{inc}, z.B. λ_{inc} =0,1, erhöht und der Lastsprung damit wiederholt, bis das Verbrennungsluftverhältnis λ zu einer gemessenen Opazität O führt, die unter dem vorgegebenen Grenzwert der Opazität Oₗᵢₘᵢₜ liegt. Danach wird der nächste volle Lastsprung ausgeführt, z.B. nun ein Lastsprung von Leerlauf auf 40% Last. Dieses Vorgehen wird wiederholt, bis für die momentane Drehzahl n alle Lastsprünge durchgeführt wurden und die Kennlinie für das Verbrennungsluftverhältnis λ für diese Drehzahl n bestimmt ist. Die Kennlinie kann z.B. anhand der bestimmten Punkte durch ein geeignetes mathematisches Verfahren, wie z.B. eine Kurvenapproximation, ermittelt werden. Danach wird die Drehzahl n um das vorgegebene Drehzahlinkrement n_{inc} erhöht und die obige Vorgehensweise wiederholt. Damit kann die Erstellung des Rauchbegrenzungskennfeldes 30 (siehe Fig. 6) auch automatisiert werden.

Um die Qualität des Kalibrierergebnisses zu verbessern, kann auch vorgesehen sein, dass jeder Lastsprung und/oder jeder Drehzahlsprung mehr als einmal ausgeführt wird und aus den so erhaltenen Ergebnissen jeweils ein Mittelwert gebildet wird.

Das so erstellte Rauchbegrenzungskennfeld 30 (Fig. 6), oder die einzelnen Kennlinien, können noch mathematisch geglättet werden, wie in Fig. 7 dargestellt.

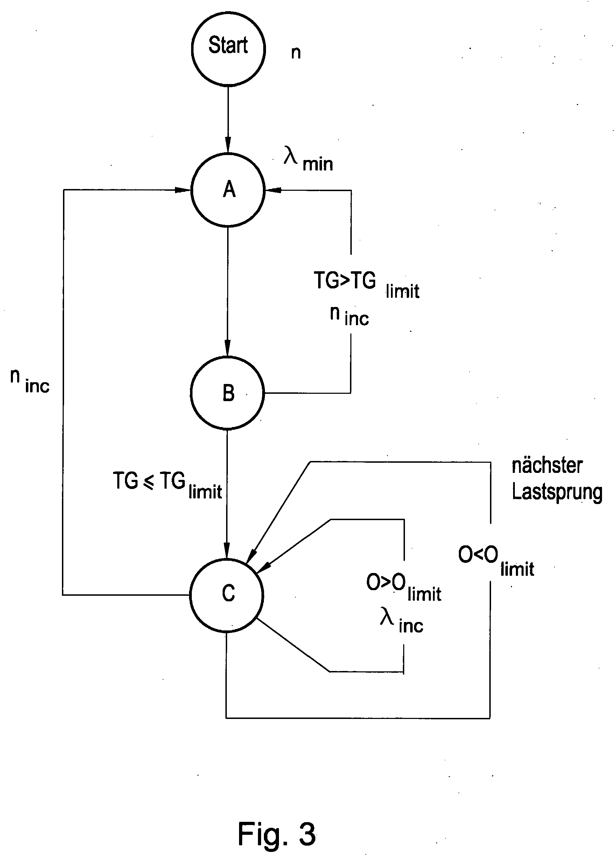

Sinnvoller Weise können bei der Erstellung des Rauchbegrenzungskennfeldes aber auch noch andere Vorgaben, wie z.B. die dynamische Reaktion des Verbrennungsmotors zum Aufbau des Drehmoments T, berücksichtigt werden. Das Verfahren zur Erstellung des Rauchbegrenzungskennfeldes 30 kann dabei ablaufen, wie nachfolgend unter Bezugnahme auf Fig. 3 beschrieben. Zum Start wird wie oben beschrieben ein minimales Verbrennungsluftverhältnis λ_{min,start} vorgegeben und mit einer bestimmten Drehzahl n begonnen. Im Schritt B wird zuerst bei der Drehzahl n ein Volllastsprung ausgeführt und die zeitliche Reaktion TG (z.B. T90 für die Zeit bis zum Erreichen einer Lastgrenze von 90% der Volllast) des Verbrennungsmotors zum Aufbau des Drehmoments T gemessen. Liegt die zeitliche Reaktion TG nicht innerhalb einer vorgegebenen zulässigen zeitlichen Reaktion TGₗᵢₘᵢₜ (z.B. durch das Entwicklungsziel vorgegeben), ist also TG > TGₗᵢₘᵢₜ, wird der Vorgang unterbrochen und die nächste Drehzahlstützstelle durch Erhöhen der Drehzahl n um das Drehzahlinkrement n_{inc} angefahren, und wieder im Schritt A begonnen. Wenn die zeitliche Reaktion TG, z.B. das T90 Limit, mit minimalem Verbrennungsluftverhältnis λₘᵢₙ, z.B. λₘᵢₙ=1,1, bereits überschritten wurde, wird diese Drehzahl n sinnvollerweise übersprungen, da eine λ-Erhöhung eine Verlangsamung des Drehmomentenanstiegs und damit eine Verschlechterung der dynamischen Reaktion bewirken würde. Für diese Drehzahl n wird dann im Rauchbegrenzungskennfeld 30 das minimale Verbrennungsluftverhältnis λₘᵢₙ verwendet. Ist die dynamische Reaktion des Verbrennungsmotors ausreichend, also TG ≤ TGₗᵢₘᵢₜ, folgt Schritt C, in dem für die jeweilige Drehzahl n wie oben unter Bezugnahme auf Fig. 2 die Kennlinie für das Verbrennungsluftverhältnis λ für diese Drehzahl n bestimmt wird. Danach wird die Drehzahl n um das Drehzahlinkrement n_{inc} erhöht und der Vorgang wiederholt, bis das ganze Rauchbegrenzungskennfeld 30, nun unter Berücksichtigung der dynamischen Reaktion des Verbrennungsmotors, erstellt ist.

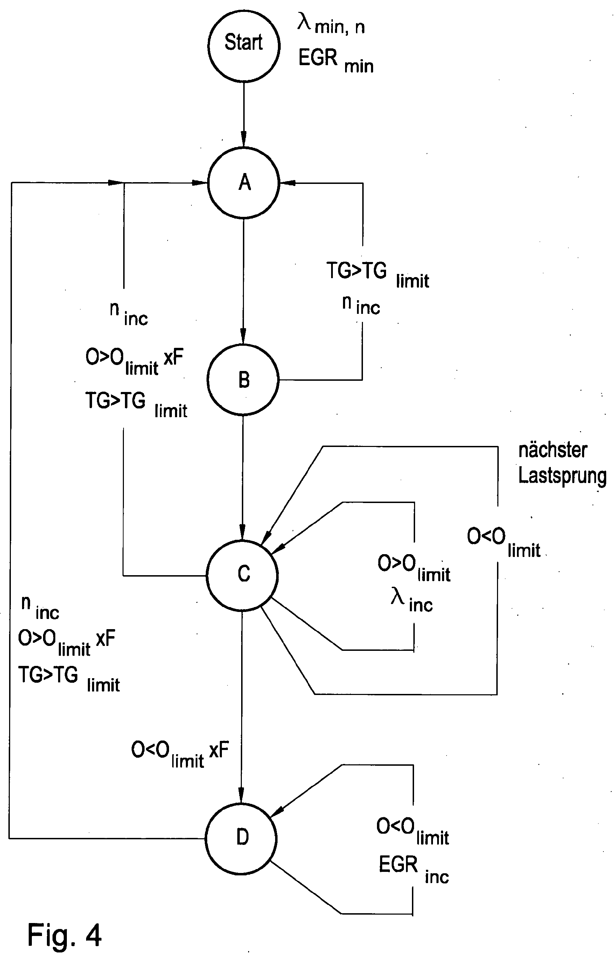

Das erfindungsgemäße Verfahren kann noch weiter um die Abstimmung der Abgasrückführung ergänzt werden, wie unter Bezugnahme auf die Fig. 4 beschrieben. Durch die Abgasrückführung wird z.B. der NOx-Ausstoß beeinflusst, wobei die NOx-Emissionen im Wesentlichen umso größer sind, je weniger Abgas rückgeführt wird. Bei der Abstimmung der Abgasrückführung geht es also darum, die untere Grenze EGRₘᵢₙ für die Abgasrückführung festzulegen bzw. das vollständige Schließen der Abgasrückführung zu begrenzen. Das kann z.B. als Maß der Öffnung (in Prozent) des Abgasrückführventils 14 angegeben werden. Das Verfahren nach Fig. 3 wird dazu mit einer minimalen Abgasrückführung EGR_{min,start} gestartet und wie oben unter Bezugnahme auf die Figuren 2 und 3 beschrieben durchgeführt. Nach dem Schritt C folgt nun ein weiterer Schritt D, wenn nach Abschluss der Erstellung der Kennlinie für das Verbrennungsluftverhältnis λ für die jeweilige Drehzahl n noch eine Opazitätsreserve vorhanden ist, also das Opazitätslimit Oₗᵢₘᵢₜ aus Schritt C um einen parametrierbaren Faktor F erhöht werden kann, wenn also gilt O < Oₗᵢₘᵢₜ x F. Im Schritt D wird dann die aktuelle minimale Abgasrückführung EGRₘᵢₙ um ein Abgasrückführungsinkrement EGR_{inc}, z.B. 1%, erhöht und dann ein Volllastsprung durchgeführt. Dies wird solange wiederholt, bis die gemessene Opazität O größer der Opazitätsgrenze Oₗᵢₘᵢₜx F ist, oder bis die dynamische Reaktion des Verbrennungsmotors nicht mehr ausreichend ist, also TG > TGₗᵢₘᵢₜ (falls die dynamische Reaktion berücksichtigt wird). Dann wird das gesamte Verfahren für die nächste Drehzahl n wiederholt.

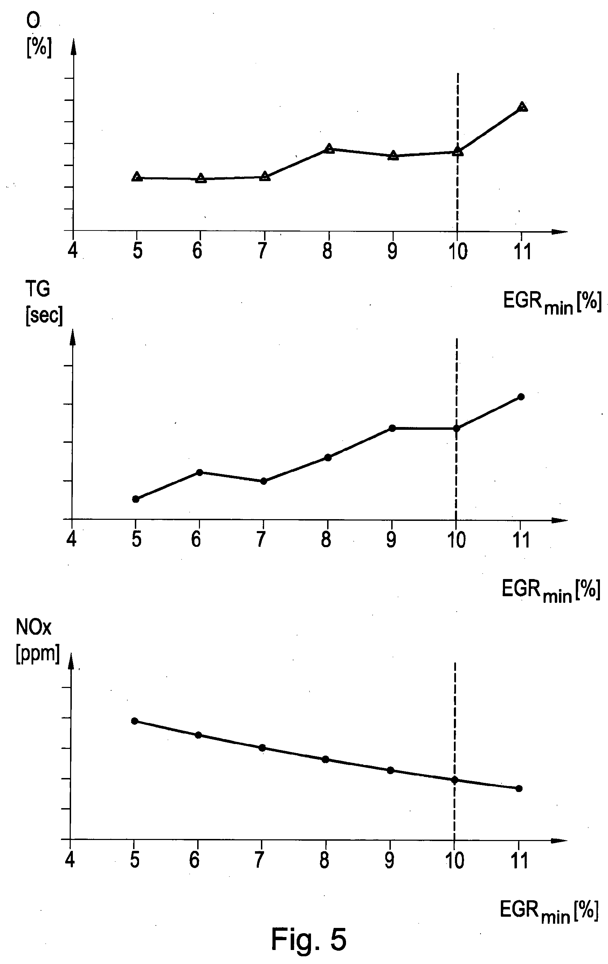

Das Ergebnis der Abgasrückführungs-Abstimmung ist beispielhaft in Fig. 5 dargestellt. Hier sind für eine bestimmte Drehzahl n in drei Diagrammen die Opazität O, die dynamische Reaktion des Verbrennungsmotors TG und die NOx-Emission über die minimale Abgasrückführung EGRₘᵢₙ dargestellt. Die Opazität O kann dabei eine maximale Opazität O bei dieser Drehzahl n, oder eine Opazität O bei einem bestimmten Lastsprung (z.B. ein Volllastsprung) sein. Wie den Diagrammen zu entnehmen ist, wird hier vorteilhafter Weise ein Kompromiss zwischen den verschiedenen Anforderungen gesucht, da eine größere Abgasrückführung zwar bekanntermaßen die NOx-Emissionen reduziert, aber gleichzeitig dadurch die dynamische Reaktion TG und die Opazität O verschlechtert werden. Der Kompromiss kann dabei durch Expertenwissen gefunden werden, entweder manuell durch entsprechend geschultes Personal oder durch geeignete Expertensysteme. Das erfindungsgemäße Verfahren liefert dazu die Werte für eine einfache, schnelle und objektive Entscheidungsfindung. Ein Kompromiss könnte aber auch in Form eines Optimierungsproblems mit hinlänglich bekannten mathematischen Methoden gelöst werden. Deshalb werden bei der Bestimmung der minimalen Abgasrückführung EGRₘᵢₙ auch bevorzugt beide Größen, Opazität O und dynamische Reaktion TG, berücksichtigt. Auf diese Weise kann ebenfalls ein ganzes Kennfeld für die minimale Abgasrückführung EGRₘᵢₙ über Last und Drehzahl erstellt werden.

Auf die oben beschriebene Weise lässt sich ein Rauchbegrenzungskennfeld 30 und ein Kennfeld für die minimale Abgasrückführung EGRₘᵢₙ automatisiert erstellen, dass dann unter Umständen z.B. von einem Fachmann nachjustiert werden kann. Die Kennfelder können dann z.B. in einer ECU in geeigneter Weise hinterlegt werden. Der Verbrennungsmotor kann dann bestimmten Lastzyklen, z.B. vorgegebenen oder genormten Lastzyklen, unterworfen werden und kontrolliert werden, ob die kalibrierten Kennfelder die Anforderungen erfüllen.

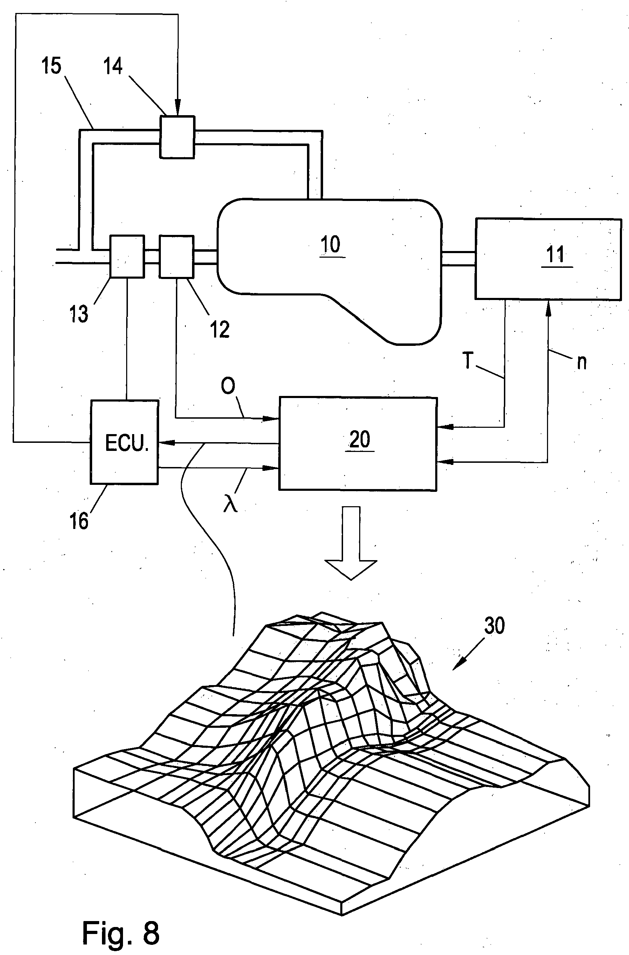

In Fig. 8 ist beispielhaft eine Anordnung zur Durchführung der oben beschriebenen, erfindungsgemäßen Verfahren dargestellt. Ein Verbrennungsmotor 10 ist hier mit einer Antriebs- und Belastungsmaschine (Dyno) 11 verbunden, mit dem z.B. eine bestimmte Drehzahl n einstellbar ist. Die Last kann z.B. mit Hilfe des Fahrpedals der Verbrennungskraftmaschine vorgegeben werden. Verbrennungsmotor 10 und Dyno 11 können z.B. in einem herkömmlichen Motorprüfstand angeordnet sein. Die Ansteuerung des Dynos 11 und/oder des Verbrennungsmotors 10 erfolgt mit einer Steuereinheit 20, z.B. einer Prüfstandssteuereinheit. Im Abgasstrom des Verbrennungsmotors 10 werden mit einem Opazimeter 12 die Opazität O und die Messwerte der Steuereinheit 20 zugeführt. Mit einer Lambdasonde 13 wird das Verbrennungsluftverhältnis λ gemessen und die Messwerte einer Motorsteuereinheit (ECU) 16 zugeführt, die die ermittelten λ-Werte an die Steuereinheit 20 weiterleitet. Das aktuelle Drehmoment T der Verbrennungskraftmaschine kann z.B. über einen am Dyno 11 angeordneten an sich bekannten Drehmomentenmessflansch ermittelt werden. Weiters kann eine Abgasrückführung 15 vorgesehen sein, wobei die Menge an rückgeführtem Abgas mittels eines Abgasrückführungsventils 14 einstellbar ist, wobei das Abgasrückführungsventil 14 von der ECU 16 gesteuert wird. Das in der Steuereinheit 20 ermittelte Rauchbegrenzungskennfeld 30 und gegebenenfalls das Kennfeld für die minimale Abgasrückführung EGRₘᵢₙ werden von der Steuereinheit 20 an die ECU 16 übertragen. Die ECU 16 übersetzt dann das ermittelte Rauchbegrenzungskennfeld 30 und gegebenenfalls das ermittelte Kennfeld für die minimale Abgasrückführung EGRₘᵢₙ in bekannter Weise in eine Einspritzmengenbegrenzung (z.B. der Einspritzventile) und gegebenenfalls in eine Öffnungsposition des Abgasrückführungsventils 14. Anstelle eines Verbrennungsmotors 10 kann natürlich aber auch ein Antriebsstrang oder ein Fahrzeug (auf einem Rollenprüfstand) verwendet werden.

## Patentansprüche

1. Verfahren zur Bestimmung eines Rauchbegrenzungskennfeldes (30) eines Verbrennungsmotors (10), **dadurch gekennzeichnet, dass** für eine Anzahl von Drehzahlen (n) jeweils eine Anzahl von Lastsprüngen durchgeführt werden und dabei die Opazität (O) als Maß für die Rußentwicklung gemessen und mit einer Opazitätsgrenze (Oₗᵢₘᵢₜ) verglichen wird, wobei für jede Drehzahl (n) mit einem vorgegebenen minimalen Verbrennungsluftverhältnis (λ_{min,start}) begonnen wird und jeder Lastsprung unter jeweiliger Erhöhung des minimalen Verbrennungsluftverhältnisses (λₘᵢₙ) um ein Verbrennungsluftverhältnisinkrement (λ_{inc}) solange wiederholt wird, bis die gemessene Opazität (O) unter der vorgegebenen Opazitätsgrenze (Oₗᵢₘᵢₜ) liegt.

2. Verfahren nach Anspruch 1, **dadurch gekennzeichnet, dass** bei jeder Drehzahl (n) zuerst ein Volllastsprung durchgeführt wird und die dynamische Reaktion des Verbrennungsmotors (10) ermittelt und berücksichtigt wird, indem die zeitliche Reaktion (TG) gemessen wird, die der Verbrennungsmotor (10) benötigt, um eine vorgegebene Lastgrenze zu erreichen und die Drehzahl (n) sofort um ein Drehzahlinkrement (n_{inc}) erhöht wird, wenn die zeitliche Reaktion (TG) größer als eine zulässigen zeitliche Reaktion (TGₗᵢₘᵢₜ) ist.

3. Verfahren nach Anspruch 1 oder 2, **dadurch gekennzeichnet, dass** für eine Drehzahl (n) das Rauchbegrenzungskennfeld (30) mit einer vorgegebenen minimalen Abgasrückführung (EGR_{min,start}) bestimmt wird und nach der Bestimmung des Rauchbegrenzungskennfeldes (30) zur Bestimmung einer minimalen Abgasrückführung (EGRₘᵢₙ) bei dieser Drehzahl ein Volllastsprung unter jeweiliger Erhöhung der minimalen Abgasrückführung (EGRₘᵢₙ) um ein Abgasrückführungsinkrement (EGR_{inc}) solange wiederholt wird, bis die gemessene Opazität (O) über der um einen parametrierbaren Faktor (F) erhöhten Opazitätsgrenze (Oₗᵢₘᵢₜ x F) liegt oder die zeitliche Reaktion (TG) über einer zulässigen zeitliche Reaktion (TGₗᵢₘᵢₜ) liegt.

4. Verfahren nach den Ansprüchen 1 bis 3, **dadurch gekennzeichnet, dass** die Opazität (O), eine dynamische Reaktion (TG) und eine NOx-Emission als Funktion der minimalen Abgasrückführung (EGRₘᵢₙ) dargestellt werden und daraus mittels eines Optimierungsverfahrens eine minimale Abgasrückführung (EGRₘᵢₙ) für eine Drehzahl (n) als Kompromiss zwischen den Anforderungen an diesen Größen ermittelt wird.

5. Anordnung zur Bestimmung eines Rauchbegrenzungskennfeldes (30) eines Verbrennungsmotors (10), **dadurch gekennzeichnet, dass** eine Steuereinheit (20) vorgesehen ist, die über Ansteuerung einer Antriebs- und Belastungsmaschine (11) und/oder des Verbrennungsmotors (10) für eine Anzahl von Drehzahlen (n) jeweils eine Anzahl von Lastsprüngen durchführt und dabei mittels eines Opazimeters (12) die Opazität (O) als Maß für die Rußentwicklung misst und die gemessene Opazität (O) mit einer vorgegebenen Opazitätsgrenze (Oₗᵢₘᵢₜ) vergleicht, wobei die Steuereinheit (20) den Ablauf so steuert, dass sie für jede Drehzahl (n) mit einem vorgegebenen minimalen Verbrennungsluftverhältnis (λ_{min,start}) beginnt und jeden Lastsprung unter jeweiliger Erhöhung des minimalen Verbrennungsluftverhältnisses (λₘᵢₙ) um ein Verbrennungsluftverhältnisinkrement (λ_{inc}) solange wiederholt, bis die gemessene Opazität (O) unter einer vorgegebenen Opazitätsgrenze (Oₗᵢₘᵢₜ) liegt.

6. Anordnung nach Anspruch 5, **dadurch gekennzeichnet, dass** die Steuereinheit (20) bei jeder Drehzahl (n) zuerst einen Volllastsprung durchführt und dabei die dynamische Reaktion des Verbrennungsmotors (10) ermittelt, indem die Steuereinheit (20) die zeitliche Reaktion (TG) misst, die der Verbrennungsmotor (10) benötigt, um eine vorgegebene Lastgrenze zu erreichen und die Steuereinheit (20) die Drehzahl (n) sofort um ein Drehzahlinkrement (n_{inc}) erhöht, wenn die zeitliche Reaktion (TG) größer als eine zulässigen zeitliche Reaktion (TGₗᵢₘᵢₜ) ist.

7. Anordnung nach Anspruch 5 oder 6, **dadurch gekennzeichnet, dass** die Steuereinheit (20) für eine Drehzahl (n) das Rauchbegrenzungskennfeld (30) mit einer vorgegebenen minimalen Abgasrückführung (EGR_{min,start}) bestimmt und die Steuereinheit (20) nach der Bestimmung des Rauchbegrenzungskennfeldes (30) zur Bestimmung einer minimalen Abgasrückführung (EGRₘᵢₙ) bei dieser Drehzahl (n) einen Volllastsprung unter jeweiliger Erhöhung der minimalen Abgasrückführung (EGRₘᵢₙ) um ein Abgasrückführungsinkrement (EGR_{inc}) solange wiederholt, bis die gemessene Opazität (O) über der um einen parametrierbaren Faktor (F) erhöhten Opazitätsgrenze (Oₗᵢₘᵢₜ x F) liegt oder die zeitliche Reaktion (TG) über einer zulässigen zeitlichen Reaktion (TGₗᵢₘᵢₜ) liegt.

## Claims

1. Method for determining a smoke limit characteristic diagram (30) of an internal combustion engine (10), **characterized in that** a number of load jumps are carried out respectively for a number of rotational speeds (n), and therewith the opacity (O) as a measure of the soot generation is measured and compared to an opacity limit (Oₗᵢₘᵢₜ), wherein each of the rotational speeds (n) is started with a predetermined minimum combustion air ratio (λ_{min,start}), and each load jump is repeated with a respective increase in the minimum combustion air ratio (λₘᵢₙ) by a combustion air ratio increment (λ_{inc}) until the measured opacity (O) lies below the predetermined opacity limit (Oₗᵢₘᵢₜ).

2. The method according to claim 1, **characterized in that** at each rotational speed (n) first a full load jump is carried out, and the dynamic response of the internal combustion engine (10) is determined and taken into account, by measurement of the time-domain response (TG) that is required by the internal combustion engine (10) in order to achieve a predetermined load limit and an immediate increase of the rotational speed (n) by a rotational speed increment (n_{inc}) if the time-domain response (TG) is greater than an allowed time-domain response (TGₗᵢₘᵢₜ).

3. The method according to claim 1 or 2, **characterized in that** the smoke limit characteristic diagram (30) with a predetermined minimum exhaust gas recirculation (EGR_{min,start}) is determined for a rotational speed (n), and - after the determination of the smoke limit characteristic diagram (30) - in order to determine a minimum exhaust gas recirculation (EGRₘᵢₙ) at this rotational speed, a full load jump is repeated with a respective increase in the minimum exhaust gas recirculation (EGRₘᵢₙ) by a exhaust gas recirculation increment (EGR_{inc}), until the measured opacity (O) lies above the opacity limit (Oₗᵢₘᵢₜ x F) increased by a parameterizable factor (F), or the time-domain response (TG) lies above an allowed time-domain response (TGₗᵢₘᵢₜ).

4. The method according to claims 1 to 3, **characterized in that** the opacity (O), a dynamic response (TG), and a NOx emission are represented as a function of the minimum exhaust gas recirculation (EGRₘᵢₙ) and a minimum exhaust gas recirculation (EGRₘᵢₙ) for a rotational speed (n) is determined therefrom by means of an optimization method, as a compromise between the demands for these quantities.

5. An assembly for determining a smoke limit characteristic diagram (30) of an internal combustion engine (10), **characterized in that** a control unit (20) is provided, which respectively carries out a number of load jumps for a number of rotational speeds (n) via control of a driving and loading machine (11) and/or the internal combustion engine, and therewith measures the opacity (O) by means of an opacimeter (12), as a measure of the soot generation and compares the measured opacity (O) with a predetermined opacity limit (Oₗᵢₘᵢₜ), wherein the control unit (20) controls the discharge so as to begin with a predetermined minimum combustion air ratio (λ_{min,start}) for each rotational speed (n), and repeats each load jump with a respective increase in the minimum combustion air ratio (λₘᵢₙ) by a combustion air ratio increment (λ_{inc}) until the measured opacity (O) lies under a predetermined opacity limit (Oₗᵢₘᵢₜ).

6. The assembly according to claim 5, **characterized in that** at each rotational speed (n), the control unit (20) first carries out a full load jump, and therewith determines the dynamic response of the internal combustion engine (20), by measurement - by the control unit (20) - of the time-domain response (TG) that is required by the internal combustion engine (10) in order to achieve a predetermined load limit, and the control unit (20) immediately increases the rotational speed (n) by a rotational speed increment (n_{inc}) if the time-domain response (TG) is greater than an allowed time-domain response (TGₗᵢₘᵢₜ).

7. The assembly according to claim 5 or 6, **characterized in that** the control unit (20) determines the smoke limit characteristic diagram (20) for a rotational speed (n) by a predetermined minimum exhaust gas recirculation (EGR_{min,start}), and - after determining the smoke limit characteristic diagram (30) - in order to determine a minimum exhaust gas recirculation (EGRₘᵢₙ) at this rotational speed, the control unit (20) repeats a full load jump with a respective increase of the minimum exhaust gas recirculation (EGRₘᵢₙ) by a exhaust gas recirculation increment (EGR_{inc}), until the measured opacity (O) lies above the opacity limit (Oₗᵢₘᵢₜ x F) increased by a parameterizable factor (F), or the time-domain response (TG) lies above an allowed time-domain response (TGₗᵢₘᵢₜ).

## Revendications

1. Procédé de détermination d'un champ caractéristique de limite de fumée (30) d'un moteur à combustion (10), **caractérisé en ce que**, pour plusieurs régimes (n), respectivement plusieurs contrôles de charge sont effectués et l'opacité (O) en tant qu'indice de développement de suie est mesurée et comparée à une limite d'opacité (Oₗᵢₘᵢₜ), sachant que chaque régime (n) commence par un ratio minimal prédéfini d'air de combustion (λ_{min,start}) et que chaque saut de charge est répété en augmentant respectivement le ratio minimal de combustion (λₘᵢₙ) à raison d'un incrément de ratio d'air de combustion (λ_{inc}) jusqu'à ce que l'opacité mesurée (O) se situe en-dessous de la limite d'opacité prédéfinie (Oₗᵢₘᵢₜ).

2. Procédé selon la revendication 1, **caractérisé en ce que**, à chaque régime (n), un saut de pleine charge est d'abord réalisé et la réaction dynamique du moteur à combustion (10) est déterminée et prise en compte en mesurant la réaction chronologique (TG) dont le moteur à combustion (10) a besoin pour atteindre une limite de charge prédéfinie et que le régime (n) est augmenté immédiatement à raison d'un incrément de régime (n_{inc}) si la réaction chronologique (TG) est supérieure à une réaction chronologique admissible (TGₗᵢₘᵢₜ).

3. Procédé selon la revendication 1 ou 2, **caractérisé en ce que**, pour un régime (n), le champ caractéristique de limitation de fumée (30) est déterminé avec un recyclage minimal prédéfini de gaz d'échappement (EGR_{min,start}) et, après la détermination du champ caractéristique de limitation de fumée (30) pour la détermination d'un recyclage minimal de gaz d'échappement (EGRₘᵢₙ) à ce régime, un saut de pleine charge est répété en augmentant respectivement le recyclage minimal de gaz d'échappement (EGRₘᵢₙ) à raison d'un incrément de recyclage de gaz d'échappement (EGR_{inc}) jusqu'à ce que l'opacité mesurée (O) se situe au-dessus de la limite d'opacité (Oₗᵢₘᵢₜ x F) augmentée à raison d'un facteur paramétrable (F) ou que la réaction chronologique (TG) se situe dessus d'une réaction chronologique admissible (TGₗᵢₘᵢₜ).

4. Procédé selon les revendications 1 à 3, **caractérisé en ce que** l'opacité (O), une réaction dynamique (TG) et une émission de NOx sont représentées en fonction du recyclage minimal de gaz d'échappement (EGRₘᵢₙ) et qu'on détermine à partir de là, au moyen d'un procédé d'optimisation, un recyclage minimal de gaz d'échappement (EGRₘᵢₙ) pour un régime (n) en tant que compromis entre les exigences imposées à ces valeurs.

5. Dispositif de détermination d'un champ caractéristique de limitation de fumée (30) d'un moteur à combustion (10), **caractérisé en ce qu'**il est prévu une unité de commande (20) qui, en commandant un engin d'entraînement et de charge (11) et/ou le moteur à combustion (10), réalise pour un certain nombre de régimes (n) respectivement un certain nombre de contrôles de charge et mesure alors au moyen d'un opacimètre (12) l'opacité (O) en tant qu'indice du développement de suie et compare l'opacité mesurée (O) à une limite d'opacité prédéfinie (Oₗᵢₘᵢₜ), l'unité de commande (20) contrôlant le déroulement de manière à commencer pour chaque régime (n) par un ratio minimal prédéfini d'air de combustion (λ_{min,start}) et répétant chaque saut de charge en augmentant respectivement le ratio minimal d'air de combustion (Aₘᵢₙ) à raison d'un incrément de ratio d'air de combustion (A_{inc}) jusqu'à ce que l'opacité mesurée (O) se situe en-dessous d'une limite d'opacité prédéfinie (Oₗᵢₘᵢₜ).

6. Dispositif selon la revendication 5, **caractérisé en ce que** l'unité de commande (20) réalise d'abord à chaque régime (n) un saut de pleine charge et détermine alors la réaction dynamique du moteur à combustion (10) par le fait que l'unité de commande (20) mesure la réaction chronologique (TG) dont le moteur à combustion (10) a besoin pour atteindre une limite de charge prédéfinie et que l'unité de commande (20) augmente immédiatement le régime (n) à raison d'un incrément de régime (n_{inc}) si la réaction chronologique (TG) est supérieure à une réaction chronologique admissible (TGₗᵢₘᵢₜ).

7. Dispositif selon la revendication 5 ou 6, **caractérisé en ce que** l'unité de commande (20) définit pour un régime (n) le champ caractéristique de limitation de fumée (30) avec un recyclage minimal prédéfini de gaz d'échappement (EGR_{min,start}) et que l'unité de commande (20), après la définition du champ caractéristique de limitation de fumée (30) pour définir un recyclage minimal de gaz d'échappement (EGRₘᵢₙ), répète à ce régime (n) un saut de pleine charge en augmentant respectivement le recyclage minimal de gaz d'échappement (EGRₘᵢₙ) à raison d'un incrément de recyclage de gaz d'échappement (EGR_{inc}) jusqu'à ce que l'opacité mesurée (O) se situe au-dessus d'une limite d'opacité (Oₗᵢₘᵢₜ x F) augmentée à raison d'un facteur paramétrable (F) pour que la réaction chronologique (TG) se situe au-dessus d'une réaction chronologique admissible (TGₗᵢₘᵢₜ).
